(19) Europäisches Patentamt / European Patent Office / Office européen des brevets

(11) **EP 3 912 718 A1**

(12) **EUROPEAN PATENT APPLICATION**
published in accordance with Art. 153(4) EPC

(43) Date of publication:
**24.11.2021 Bulletin 2021/47**

(21) Application number: **20741380.8**

(22) Date of filing: **15.01.2020**

(51) Int Cl.:
*B01J 29/69* (2006.01)    *B01D 53/86* (2006.01)
*B01D 53/90* (2006.01)    *B01D 53/94* (2006.01)
*B01J 37/02* (2006.01)    *F01N 3/10* (2006.01)
*F01N 3/28* (2006.01)    *B01J 35/06* (2006.01)

(86) International application number:
**PCT/JP2020/001119**

(87) International publication number:
**WO 2020/149315 (23.07.2020 Gazette 2020/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2019 JP 2019004721**

(71) Applicant: **Hitachi Zosen Corporation
Osaka-shi, Osaka 559-8559 (JP)**

(72) Inventors:
• **SHIMIZU, Kana**
  **Osaka-shi, Osaka 559-8559 (JP)**
• **SHONO, Emi**
  **Osaka-shi, Osaka 559-8559 (JP)**
• **NISHI, Tsugumi**
  **Osaka-shi, Osaka 559-8559 (JP)**

(74) Representative: **Grünecker Patent- und
Rechtsanwälte
PartG mbB
Leopoldstraße 4
80802 München (DE)**

(54) **CATALYST FOR EXHAUST GAS PURIFICATION USE, AND METHOD FOR PRODUCING CATALYST FOR EXHAUST GAS PURIFICATION USE**

(57) An exhaust gas purifying catalyst (10) includes a substrate (3) on which a metallic oxide (1) and zeolite (2) are supported, the metallic oxide (1) being selected from Ti, Zr, Ce, Nb, Al, Si, and alkali metals. The exhaust gas purifying catalyst (10) has a three-layered structure formed in the substrate (3), the three-layered structure being constituted by a layer having the metallic oxide (1) supported thereon and having two sides respectively provided with layers having the zeolite (2) supported thereon or by a layer having the zeolite (2) supported thereon and having two sides respectively provided with layers having the metallic oxide (1) supported thereon.

FIG. 1

（a）

（b）

**Description**

Technical Field

The present invention relates to a catalyst for exhaust gas purification use (exhaust gas purifying catalyst) for removing a nitrogen oxide in an exhaust gas and to a method for producing the catalyst.

Background Art

Selective catalytic reduction with ammonia (hereinafter, referred to as ammonia SCR) has been often employed as a method for removing a nitrogen oxide (NOx) contained in a combustion exhaust gas. The ammonia SCR is a method for adding, to the exhaust gas, ammonia as a reducing agent and making the exhaust gas in contact with a NOx removal catalyst containing vanadium or titania as a main component so as to remove the nitrogen oxide.

However, an exhaust gas discharged from, e.g., an incineration facility or a marine vessel engine has a high sulfur oxide ($SO_x$) concentration and a high nitrogen oxide concentration, and has a low temperature. For example, at a location downstream of a supercharger for an exhaust gas from a marine vessel engine, the exhaust gas has a temperature of 300°C or less.

In a case where the ammonia SCR is applied under such conditions, ammonia ($NH_3$), which is a reducing agent, reacts with a sulfur oxide (SOx) to generate ammonium sulfate ($(NH_4)_2SO_4$), thereby causing a trouble(s) such as blocking of a duct and/or catalyst clogging.

A technique for solving this problem is disclosed in Patent Literature 1, for example. Patent Literature 1 discloses a combustion exhaust gas purifying method and a NOx removal catalyst each capable of effectively reducing a nitrogen oxide in a combustion exhaust gas discharged from, e.g., a marine vessel engine which combustion exhaust gas contains a nitrogen oxide (NOx) and a sulfur oxide (SOx) at high concentrations and has a low exhaust gas temperature of 300°C or less.

Citation List

[Patent Literature]

[Patent Literature 1]
International Publication No. WO 2015/147257

Summary of Invention

Technical Problem

Unfortunately, according to the technique for removing the nitrogen oxide in the exhaust gas with use of the NOx removal catalyst, a carbon component contained in the exhaust gas may be adhered to the NOx removal catalyst, whereby the nitrogen-oxide removal capability is degraded, disadvantageously. In order to deal with this problem, there have been some known techniques. For example, one technique for diesel vehicles removes a carbon component by trapping the carbon component with a filter and burning it, and another technique heats a NOx removal catalyst to which a carbon component is adhered. However, these techniques require a filter or equipment for burning, and therefore are high at cost, disadvantageously.

In consideration of these circumstances, an aspect of the present invention has an object to provide an exhaust gas purifying catalyst capable of suppressing or reducing degradation in nitrogen-oxide removal capability (in other words, an exhaust gas purifying catalyst exhibiting a high denitration capability retention rate).

Solution to Problem

In order to attain the object, an exhaust gas purifying catalyst in accordance with an aspect of the present invention is an exhaust gas purifying catalyst for removing a nitrogen oxide in an exhaust gas to which at least one of a hydrocarbon and an alcohol is added, the exhaust gas purifying catalyst including: a substrate on which a metallic oxide and zeolite are supported, the metallic oxide being selected from Ti, Zr, Ce, Nb, Al, Si, and alkali metals, the exhaust gas purifying catalyst having a three-layered structure formed in the substrate, the three-layered structure being constituted by a layer having the metallic oxide supported thereon and having two sides respectively provided with layers having the zeolite supported thereon or by a layer having the zeolite supported thereon and having two sides respectively provided with layers having the metallic oxide supported thereon.

Advantageous Effects of Invention

In accordance with an aspect of the present invention, it is possible to suppress or reduce degradation in nitrogen-oxide removal capability.

Brief Description of Drawings

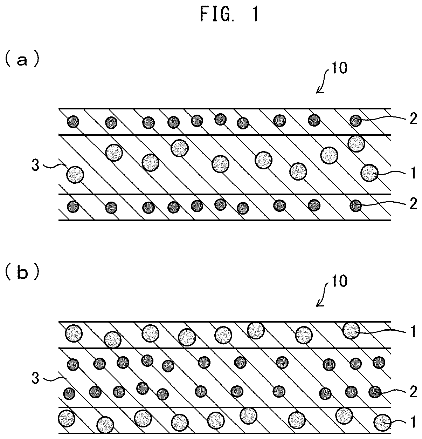

(a) and (b) of Fig. 1 are cross-sectional views illustrating a configuration of an exhaust gas purifying catalyst in accordance with an embodiment of the present invention.

Description of Embodiments

The following will describe an embodiment of the present invention. However, the present invention is not limited to this. Unless otherwise noted, the expression "A to B" indicating a numerical range means "not less than A and not more than B". The term "mass" is considered as a synonym of "weight".

<Exhaust gas purifying catalyst>

An exhaust gas purifying catalyst 10 in accordance with an aspect of the present invention is an exhaust gas purifying catalyst for promoting a decomposition reaction of a nitrogen oxide in an exhaust gas to which at least one of a hydrocarbon and an alcohol is added. In other words, the exhaust gas purifying catalyst is designed for exhaust gas purification, and is used to remove a nitrogen oxide in the exhaust gas.
(a) and (b) of Fig. 1 are cross-sectional views illustrating a configuration of the exhaust gas purifying catalyst 10 in accordance with an embodiment of the present invention.
The exhaust gas purifying catalyst 10 includes a substrate 3 on which a metallic oxide 1 and zeolite 2 are supported in a layered form. As shown in (a) of Fig. 1, the exhaust gas purifying catalyst 10 may include the substrate 3 provided with a layer (metallic oxide layer) having the metallic oxide 1 supported thereon and having two sides respectively provided with layers (zeolite layers) having the zeolite 2 supported thereon. Alternatively, as shown in (b) of Fig. 1, the exhaust gas purifying catalyst 10 may include the substrate 3 provided with a layer (zeolite layer) having the zeolite 2 supported thereon and having two sides respectively provided with layers (metallic oxide layers) having the metallic oxide 1 supported thereon.
Note that a "denitration capability retention rate" is calculated according to formula (1) below.

$$\text{Denitration capability retention rate} = k \, / \, k_0 \, ... \, \text{formula (1).}$$

Here, "k" and "$k_0$" in formula 1 are calculated according to formula (2) below. Note that the denitration rate of $k_0$ is an initial denitration rate.

$$k = -AV \times \ln(1 - \text{denitration rate}) \, ... \, \text{formula (2).}$$

Here, "AV" in formula (2) is an areal velocity, and is calculated according to formula (3) below.

$$AV \, [\text{Nm/h}] = (\text{flow rate} \, [\text{Nm}^3/\text{h}] \, \text{of exhaust gas}) \, / \, \text{surface area} \, [\text{m}^2] \, \text{of catalyst} \, ... \, \text{formula (3).}$$

The exhaust gas purifying catalyst 10 is a structure constituted by the substrate 3 provided with the layer (zeolite layer) having the zeolite 2 supported thereon and the layer (metallic oxide layer) having the metallic oxide 1 supported thereon. The exhaust gas purifying catalyst 10 configured as the above-described structure is practically applicable as an exhaust gas purifying catalyst that is excellent in durability and practicality. The structure may be in the form of a honeycomb structure having a honeycomb shape or in the form of a honeycomb shape constituted only of small corrugated plate pieces, for example. In order to suppress or reduce a pressure drop, the exhaust gas purifying catalyst 10 is more preferably a honeycomb structure that has a honeycomb shape and that is constituted by the substrate 3 provided with the layer (zeolite layer) having the zeolite 2 supported thereon and the layer (metallic oxide layer) having the metallic oxide 1 supported thereon.

The layer (zeolite layer) having the zeolite 2 supported thereon and the layer (metallic oxide layer) having the metallic oxide 1 supported thereon, which are provided to the substrate 3 of the exhaust gas purifying catalyst 10, may each contain an inorganic binder in order to retain the form and to bond the zeolite 2 and/or the metallic oxide 1 to the substrate 3.

The inorganic binder is not limited to any particular one, provided that it contains a component that would not become a metallic oxide but becomes a zirconium oxide ($ZrO_2$), titania ($TiO_2$), silica ($SiO_2$), or alumina ($Al_2O_3$), each of which may be added as an inorganic binder, after being calcined. Thus, the inorganic binder may be selected from commercially-available ones. For example, the inorganic binder may be a zirconia sol containing a zirconium acetate ($ZrO(C_2H_3O_2)_2$) as a main component. The weight ratio of the inorganic binder contained in the layer (zeolite layer) having the zeolite 2 supported thereon is 0.02 to 1.0, relative to 1.0 of the zeolite 2. The weight ratio of the inorganic binder contained in the layer (metallic oxide layer) having the metallic oxide 1 supported thereon is 0.02 to 1.0, relative to 1.0 of the metallic oxide 1.

(Exhaust gas)

The exhaust gas is not limited to any particular one, provided that it contains a nitrogen oxide (NOx) and a carbon component. The exhaust gas may be, e.g., a combustion exhaust gas discharged from a diesel engine, an oil burning boiler, a gas turbine, an incinerator for burning waste such as garbage, or the like. For example, the exhaust gas may be an exhaust gas from a marine vessel engine generated as a result of burning of a fuel containing many impurities, such as heavy oil (e.g., heavy oil C). The exhaust gas from the marine vessel engine and the exhaust gas from the incineration facility contain large amounts of nitrogen oxide (NOx), sulfur oxide (SOx), and a carbon component.

An exhaust gas purifying catalyst 10 for purifying the exhaust gas from the marine vessel engine or the like is disposed at a location where the exhaust gas, having discharged from the marine vessel diesel engine and having passed through a supercharger, has a low temperature of approximately 250°C (e.g., 130°C to 300°C). An exhaust gas purifying catalyst 10 for purifying an exhaust gas from the incineration facility or the like is disposed at a location where the exhaust gas, having been discharged from the incineration facility for burning waste such as garbage and having passed through a bag filter for exhaust gas processing, has a low temperature of approximately 250°C (e.g., 130°C to 300°C).

The exhaust gas purifying catalyst 10 is designed for an exhaust gas to which at least one of a hydrocarbon and an alcohol is added, and has the substrate 3 provided with the layer (metallic oxide layer) having the metallic oxide 1 selected from Ti, Zr, Ce, Nb, Al, Si, and alkali metals supported thereon and the layer (zeolite layer) having the zeolite 2 supported thereon. With this, chemical bonding hardly occurs between the exhaust gas purifying catalyst 10 and a carbon component contained in an exhaust gas having a temperature of approximately 130°C to approximately 300°C.

Particularly in a case where the zeolite 2 is FER zeolite, chemical bonding hardly occurs between the exhaust gas purifying catalyst 10 and a carbon component contained in an exhaust gas having a temperature of 300°C or less.

Addition of an alcohol or a hydrocarbon as a reducing agent into an exhaust gas makes it possible to reduce and remove a nitrogen oxide (NOx) in the exhaust gas.

The hydrocarbon is not limited to any particular one, but is preferably a $C_{1-5}$ hydrocarbon, more preferably a $C_{1-3}$ hydrocarbon. Particularly preferably, the hydrocarbon is methane, ethane, ethylene, or propane.

Addition of an alcohol as a reducing agent into an exhaust gas makes it possible to reduce and remove a nitrogen oxide in the exhaust gas. The alcohol is not limited to any particular one, but is preferably a $C_{1-11}$ alcohol, more preferably a $C_{1-5}$ alcohol. The alcohol is preferably an aliphatic alcohol. The aliphatic alcohol may be in a straight-chain form, a branched form, or a cyclic form. Particularly preferably, the aliphatic alcohol is methanol, ethanol, or isopropyl alcohol.

(Substrate)

The substrate 3 may be a commercially-available inorganic fiber sheet, for example. Examples of the inorganic fiber sheet encompass a glass fiber sheet (glass fiber paper) and a ceramic fiber sheet (ceramic fiber paper). The inorganic fiber sheet may be a flat inorganic fiber sheet or a corrugated inorganic fiber sheet. The exhaust gas purifying catalyst 10 in accordance with an embodiment of the present invention is preferably a honeycomb structure formed by alternately combining (1) an exhaust gas purifying catalyst(s) 10 each including a flat inorganic fiber sheet which is a substrate 3 having zeolite 2 and a metallic oxide 1 supported thereon and (2) an exhaust gas purifying catalyst(s) 10 each including a corrugated inorganic fiber sheet which is a substrate 3 having zeolite 2 and a metallic oxide 1 supported thereon.

(Metallic oxide layer)

The metallic oxide 1 is an oxide of a metal selected from Ti, Zr, Ce, Nb, Al, Si, and alkali metals (e.g., Li, Na, K). Specifically, the metallic oxide 1 is $TiO_2$, $ZrO_2$, $CeO_2$, $Nb_2O_5$, $Al_2O_3$, $SiO_2$, $Na_2O$, $K_2O$, or a combination thereof. Note that the metallic oxide 1 may include plural kinds of these metallic oxides. From the viewpoint of capability, the metallic oxide 1 is preferably an oxide of Ti or Zr.

(Zeolite layer)

The exhaust gas purifying catalyst 10 can remove a nitrogen oxide ($NO_x$) in the exhaust gas, thanks to the zeolite 2 included therein. This is possible, since the zeolite 2 can adsorb and activate a nitrogen oxide to catalytically decompose the nitrogen oxide into nitrogen and oxygen in a stable manner for a long term.
The zeolite 2 is not limited to any particular one, and may be MFI zeolite or FER zeolite, for example.
Preferably, the zeolite 2 has a catalyst metal supported thereon, since such zeolite 2 can enhance the denitration capability. Examples of the catalyst metal encompass bismuth (Bi), silver (Ag), lead (Pb), and cobalt (Co).

(Exhaust gas purifying catalyst)

With the exhaust gas purifying catalyst 10 configured as above, bonding hardly occurs between the exhaust gas purifying catalyst 10 and a carbon component contained in the exhaust gas. Consequently, it is possible to suppress or reduce the phenomenon that the carbon component contained in the exhaust gas is adhered to the catalyst. As a result, it is possible to suppress or reduce the degradation in the nitrogen-oxide removal capability. In other words, it is possible to enhance the denitration capability retention rate of the exhaust gas purifying catalyst 10.
In the exhaust gas purifying catalyst 10, the weight ratio of the layer (metallic oxide layer) having the metallic oxide 1 supported thereon is 0.01 to 1.0, relative to 1.0 of the layer (zeolite layer) having the zeolite 2 supported thereon. Preferably, the weight ratio of the layer (metallic oxide layer) having the metallic oxide 1 supported thereon is 0.02 to 0.5, relative to 1.0 of the layer (zeolite layer) having the zeolite 2 supported thereon. With this, it is possible to further suppress or reduce the degradation in the nitrogen-oxide removal capability. In other words, it is possible to further enhance the denitration capability retention rate. Note that the weight of the layer (zeolite layer) having the zeolite 2 supported thereon and the weight of the layer (metallic oxide layer) having the metallic oxide 1 supported thereon can each be obtained by subtracting the weight measured before the layer is formed from the weight measured after the layer is formed.

<Method for producing exhaust gas purifying catalyst>

The following will describe a method in accordance with an aspect of the present invention for producing an exhaust gas purifying catalyst (shown in (a) of Fig. 1) including a substrate 3 provided with a layer (metallic oxide layer) having a metallic oxide 1 supported thereon and having two sides respectively provided with layers (zeolite layers) having zeolite 2 supported thereon. In this case, the method in accordance with the aspect of the present invention for producing the exhaust gas purifying catalyst includes: a metallic oxide slurry preparing step; a metallic oxide supporting step of forming, to the substrate 3, the layer (metallic oxide layer) having the metallic oxide 1 supported thereon; a zeolite slurry preparing step; and a zeolite supporting step of forming the layer (zeolite layer) having zeolite 2 supported thereon. The method in accordance with the aspect of the present invention for producing the exhaust gas purifying catalyst carries out these steps such that, after the layer (metallic oxide layer) having the metallic oxide 1 supported thereon is formed to the substrate 3, the layer (zeolite layer) having the zeolite 2 supported thereon is formed.
In the metallic oxide slurry preparing step, the metallic oxide 1 is added to a solvent so as to prepare a slurry containing the metallic oxide 1 (hereinafter, such a slurry will be referred to as a metallic oxide slurry). In the metallic oxide slurry preparing step, an inorganic binder may be further added to the solvent. In a case where the inorganic binder is added to the solvent, it is preferable to add the inorganic binder after stirring of the metallic oxide slurry to which the inorganic binder is not added yet. This can uniformly disperse the metallic oxide slurry in the solvent, and therefore is preferable. The weight ratio of the inorganic binder contained in the layer (metallic oxide layer) formed by causing the metallic oxide 1 to be supported on the substrate 3 is 0.02 to 1.0, relative to 1.0 of the metallic oxide 1.
The inorganic binder in each layer is added to cause the zeolite 2 or the metallic oxide 1 to be adhered to the substrate 3. The layer (metallic oxide layer) formed by causing the metallic oxide 1 to be supported on the substrate 3 plays a role to suppress or reduce the degradation in the nitrogen-oxide removal capability.
The form of the metallic oxide 1 is not limited to any particular one, provided that the metallic oxide 1 can be applied to the substrate 3 with it. For example, the metallic oxide 1 may be in the form of powder or a sol. For example, a substance added as the metallic oxide 1 has a larger particle size than that of a substance added as the inorganic binder.

The weight ratio between the solvent and the metallic oxide 1 is preferably 0.1 to 5.0 : 1.0, more preferably 0.1 to 3.0 : 1.0. Examples of the solvent encompass ion-changed water, a solvent having one or more alkoxy groups and one or more hydroxy groups, and a solvent and an acid each having two or more hydroxy groups such as ethylene glycol.

In the metallic oxide supporting step, the substrate 3 is soaked with the metallic oxide slurry prepared in the metallic oxide slurry preparing step so that the metallic oxide slurry is contained in the substrate 3 from its inside to its surface. This causes the metallic oxide 1 to be supported on the substrate 3. The method for causing the metallic oxide to be supported on the substrate may be any method, provided that the metallic oxide slurry can be contained in the substrate 3 from its inside to its surface with it. For example, the substrate 3 may be immersed in the metallic oxide slurry, or the metallic oxide slurry may be applied onto the surface of the substrate 3.

In the metallic oxide supporting step, the solvent contained in the metallic oxide slurry needs to be evaporated after the metallic oxide slurry is caused to be contained in the substrate 3 from its inside to its surface. For this purpose, the metallic oxide supporting step may include dry processing, for example. The drying temperature is preferably 100°C or higher. The method for the dry processing may be natural drying. By carrying out the dry processing to evaporate the solvent contained in the metallic oxide slurry, it is possible to form, to the substrate 3, the layer (metallic oxide layer) having the metallic oxide 1 supported thereon.

In the zeolite slurry preparing step, a zeolite slurry is prepared by adding the zeolite 2 to a solvent. Examples of the solvent encompass ion-changed water, a solvent having one or more alkoxy groups and one or more hydroxy groups, and a solvent and an acid each having two or more hydroxy groups such as ethylene glycol.

In the zeolite slurry preparing step, a catalyst metal and/or an inorganic binder may be further added to the solvent.

In a case where the catalyst metal is added to the solvent, it is preferable to mix the catalyst metal with the solvent prior to addition of the zeolite 2 to the solvent. In a case where the inorganic binder is added to the solvent, it is preferable to add the inorganic binder after heating and stirring the zeolite slurry to which the inorganic binder is not added yet and cooling it to room temperature. The heating temperature is not limited to any particular one, provided that it is a temperature not higher than a boiling point of the solvent. The stirring time only needs to be the one with which the zeolite slurry can be stirred sufficiently. For example, the stirring time is preferably three hours or more. From the viewpoint of working efficiency, the stirring time is preferably 10 hours or less.

The weight ratio between the solvent and the zeolite 2 is preferably 0.5 to 5.0 : 1.0, for example.

The weight of the catalyst metal and the weight of the zeolite 2 may be appropriately adjusted so that, preferably, the weight ratio of the catalyst metal and the zeolite 2 is 1.0 weight% to 20 weight%, relative to 100 weight% of the exhaust gas purifying catalyst 10.

The weight ratio between the inorganic binder and the zeolite 2 is preferably 0.02 to 1.0 : 1.0, for example.

In the zeolite supporting step, the surface of the substrate 3 having the metallic oxide 1 supported thereon is covered with the zeolite slurry prepared in the zeolite slurry preparing step, and the substrate 3 covered with the zeolite slurry is subjected to drying and calcination. Consequently, the layer (zeolite layer) having the zeolite 2 supported thereon is formed on the substrate 3 having the metallic oxide 1 supported thereon.

The zeolite supporting step only needs to be capable of covering, with the zeolite slurry, the surface of the substrate 3 having the metallic oxide 1 supported thereon. The zeolite supporting step may be carried out by immersing, in the zeolite slurry prepared in the zeolite slurry preparing step, the substrate 3 which has undergone the metallic oxide supporting step and which has the metallic oxide supported thereon. Alternatively, the zeolite supporting step may be carried out by applying the zeolite slurry onto the surface of the substrate 3 having the metallic oxide supported thereon.

The drying temperature in the zeolite supporting step is preferably 100°C or more, since it is necessary to evaporate the solvent contained in the zeolite slurry. The drying method in the zeolite supporting step may be natural drying. At the end of the zeolite supporting step, calcination is carried out to evaporate an organic component contained in the substrate 3. In order to get rid of the organic component contained in the substrate 3, the calcination temperature is preferably 400°C to 600°C.

Next, the following will describe a method for producing the exhaust gas purifying catalyst 10 shown in (b) of Fig. 1. This production method includes a zeolite slurry preparing step, a zeolite supporting step, a metallic oxide slurry preparing step, and a metallic oxide supporting step. This production method carries out these steps such that, after the layer (zeolite layer) having the zeolite 2 supported thereon is formed to the substrate 3, the layer (metallic oxide layer) having the metallic oxide 1 supported thereon is formed. Note that the steps are the same as those described above.

In this production method, the calcination processing in the zeolite supporting step is preferably carried out after the metallic oxide supporting step. Note that the exhaust gas purifying catalyst 10 shown in (b) of Fig. 1 may be produced by applying a metallic oxide sol to the substrate 3 having the zeolite 2 supported thereon and by drying and calcining the substrate 3 to which the metallic oxide sol is applied.

The present invention is not limited to the embodiments, but can be altered by a skilled person in the art within the scope of the claims. The present invention also encompasses, in its technical scope, any embodiment derived by combining technical means disclosed in differing embodiments.

Examples

Next, the following will describe Examples of the present invention. In the Examples of the present invention, exhaust gas purifying catalysts of Examples 1 to 10 and an exhaust gas purifying catalyst of Comparative Example 1 were prepared.

[Example 1]

5 g of a titanium oxide ($TiO_2$) and 2.5 g of a zirconia sol (available from Daiichi Kigenso Kagaku Kogyo Co., Ltd.) as an inorganic binder were added to 2.5 g of ion-changed water, and a resultant was stirred. Consequently, a titanium oxide slurry was prepared.

The whole amount of the titanium oxide slurry was applied to a cut piece of glass fiber paper having a size of 10 cm × 15 cm, and the cut piece of glass fiber paper was dried at 110°C for five minutes. Consequently, the glass fiber paper provided with the layer (metallic oxide layer) formed by causing the titanium oxide to be supported as the metallic oxide 1 on the substrate 3 was prepared.

Next, 0.66 g of bismuth nitrate (product name: Bismuth (III) Nitrate Pentahydrate, available from Kishida Chemical Co., Ltd.) was added to 5 g of ion-changed water. To a resultant, 5 g of powdery FER zeolite (available from Zeolyst International) was further added. Consequently, a zeolite slurry to which an inorganic binder was not added yet was prepared. The zeolite slurry to which the inorganic binder was not added yet was stirred at 60°C for three hours, and was cooled to room temperature. Thereafter, 2.5 g of a zirconia sol (available from Daiichi Kigenso Kagaku Kogyo Co., Ltd.) was added thereto as the inorganic binder, and a resultant was stirred. Consequently, a zeolite slurry was prepared. 18 g of the zeolite slurry was applied to each of two sides of the glass fiber paper to which the titanium oxide slurry was applied, and the cut piece of glass fiber paper was dried at 110°C for an hour. Consequently, the glass fiber paper corresponding to the substrate 3 having two sides respectively provided with the layers (zeolite layers) having the zeolite 2 supported thereon was prepared. Thereafter, the glass fiber paper was calcined at 500°C for three hours, so that a flat catalyst (exhaust gas purifying catalyst) was obtained.

[Example 2]

An exhaust gas purifying catalyst was prepared by the same procedures as in Example 1, except that application of the titanium oxide slurry to the glass fiber paper and application of the zeolite slurry to the glass fiber paper were carried out in reverse order.

[Example 3]

An exhaust gas purifying catalyst was prepared by the same procedures as in Example 2, except that the titanium oxide was replaced with a cerium oxide $CeO_2$.

[Example 4]

An exhaust gas purifying catalyst was prepared by the same procedures as in Example 2, except that the titanium oxide was replaced with a niobium oxide $Nb_2O_5$.

[Example 5]

An exhaust gas purifying catalyst was prepared by the same procedures as in Example 2, except that the titanium oxide was replaced with a zirconium oxide ZrO2.

[Example 6]

0.66 g of bismuth nitrate (product name: Bismuth (III) Nitrate Pentahydrate, available from Kishida Chemical Co., Ltd.) was added to 5 g of ion-changed water. To a resultant, 5 g of powdery FER zeolite (available from Zeolyst International) was further added. Consequently, a zeolite slurry to which an inorganic binder was not added yet was prepared. The zeolite slurry to which the inorganic binder was not added yet was stirred at 60°C for three hours, and was cooled to room temperature. Thereafter, 2.5 g of a zirconia sol (available from Daiichi Kigenso Kagaku Kogyo Co., Ltd.) was added thereto as an inorganic binder, and a resultant was stirred. Consequently, a zeolite slurry was prepared. The whole amount of the zeolite slurry was applied to a cut piece of glass fiber paper having a size of 10 cm × 15 cm, and the cut piece of glass fiber paper was dried at 110°C for an hour. Consequently, the glass fiber paper having the zeolite slurry applied thereto was prepared.

Next, 18 g of a solution prepared by mixing 11.25 g of a zirconia sol (available from Daiichi Kigenso Kagaku Kogyo Co., Ltd.) and 5 g of ion-changed water was applied to each of two sides of the glass fiber paper having the zeolite slurry applied thereto. Thereafter, the glass fiber paper was dried at 110°C for an hour, and was then calcined at 500°C for three hours. Consequently, a flat catalyst was obtained.

[Example 7]

An exhaust gas purifying catalyst was prepared by the same procedures as in Example 6, except that the zirconia sol applied to the glass fiber paper having the zeolite slurry applied thereto was replaced with an Al ethoxide sol (product name: Aluminum Ethoxide, available from Kishida Chemical Co., Ltd.).

[Example 8]

An exhaust gas purifying catalyst was prepared by the same procedures as in Example 6, except that the zirconia sol applied to the glass fiber paper having the zeolite slurry applied thereto was replaced with a Zr propoxide (product name: Zirconium Propoxide (approximately 70% 1-propanol solution), available from Aldrich).

[Example 9]

An exhaust gas purifying catalyst was prepared by the same procedures as in Example 6, except that the zirconia sol applied to the glass fiber paper having the zeolite slurry applied thereto was replaced with a K methoxide (product name: Potassium Methoxide, available from Kanto Chemical Co., Inc.).

[Example 10]

An exhaust gas purifying catalyst was prepared by the same procedures as in Example 6, except that the zirconia sol applied to the glass fiber paper having the zeolite slurry applied thereto was replaced with tetraethyl orthosilicate (product name: Tetraethyl Orthosilicate, available from Wako Pure Chemicals).

The catalysts of Examples 1 to 10 each had a three-layered structure.

[Reference Example 1]

0.66 g of bismuth nitrate (product name: Bismuth (III) Nitrate Pentahydrate, available from Kishida Chemical Co., Ltd.) was added to 5 g of ion-changed water. To a resultant, 5 g of powdery FER zeolite (available from Zeolyst International) was further added. Consequently, a zeolite slurry to which an inorganic binder was not added yet was prepared. The zeolite slurry to which the inorganic binder was not added yet was stirred at 60°C for three hours, and was cooled to room temperature. Thereafter, 8 g of a titania sol (product name: Tainokku M-6, available from Taki Chemical Co., Ltd.) was added thereto as an inorganic binder, and a resultant was stirred. Consequently, a zeolite slurry was prepared. 18 g of the zeolite slurry was applied to a cut piece of glass fiber paper having a size of 100 mm × 150 mm. Then, the cut piece of glass fiber paper was dried at 110°C for an hour, and was calcined at 500°C for three hours. Consequently, a flat catalyst was obtained.

[Comparative Example 1]

0.66 g of bismuth nitrate (product name: Bismuth (III) Nitrate Pentahydrate, available from Kishida Chemical Co., Ltd.) was added to 5 g of ion-changed water. To a resultant, 5 g of powdery FER zeolite (available from Zeolyst International) was further added. Consequently, a zeolite slurry to which an inorganic binder was not added yet was prepared. The zeolite slurry to which the inorganic binder was not added yet was stirred at 60°C for three hours, and was cooled to room temperature. Thereafter, 2.5 g of a zirconia sol (available from Daiichi Kigenso Kagaku Kogyo Co., Ltd.) was added thereto as an inorganic binder, and a resultant was stirred. Consequently, a zeolite slurry was prepared. 18 g of the zeolite slurry was applied to a cut piece of glass fiber paper having a size of 10 mm × 15 mm. Then, the cut piece of glass fiber paper was dried at 110°C for an hour. Consequently, a flat catalyst was obtained.

(Evaluation of durability)

The capability test was conducted by exposing the exhaust gas purifying catalysts of Examples 1 to 10 and Comparative Example 1 to the denitration capability test gas condition indicated in Table 2. For each exhaust gas purifying catalyst, an initial denitration rate was obtained by measuring, with an automatic NOx analyzer (available from Anatec Yanako Corporation), a NOx concentration in an exhaust gas before and after addition of the flat catalyst. Note that the flow rate of the exhaust gas was 0.06 Nm$^3$/h.

Next, the exhaust gas purifying catalysts of Examples 1 to 10 and Comparative Example 1 were subjected to seven-hour exposure to an exhaust gas generated by burning, as a fuel, light oil containing a carbon component. Then, the exhaust gas purifying catalysts were exposed to the denitration capability test gas condition indicated in Table 1. In this manner, the capability test was conducted. For each exhaust gas purifying catalyst, a denitration rate after the durability test was obtained by measuring, with the automatic NOx analyzer, a NOx concentration in an exhaust gas before and after setting of the exhaust gas purifying catalyst. Note that the flow rate of the exhaust gas was 0.06 Nm$^3$/h.

From the initial denitration rate and the denitration rate after the durability test, a denitration capability retention rate was calculated according to the above-indicated formulae (1) to (3).

[Table 1]

| Denitration capability evaluation test gas condition | |
|---|---|
| NO | 1000 ppmvd |
| Air | Balance |
| $O_2$ | 14 vol% |
| Moisture | 6 vol% |
| Methanol | 1800 ppmvd |
| Temperature | 250°C |

[Table 2]

| Durability test results | Initial denitration rate [%] | Denitration rate after durability test [%] | Denitration capability retention rate [-] | Weight ratio of metallic oxide relative to 1 of zeolite |
|---|---|---|---|---|
| Example 1 | 71 | 63 | 0.80 | 0.5 |
| Example 2 | 74 | 72 | 0.94 | 0.5 |
| Example 3 | 76 | 61 | 0.66 | 0.5 |
| Example 4 | 86 | 68 | 0.58 | 0.5 |
| Example 5 | 68 | 68 | 1.00 | 0.5 |
| Example 6 | 82 | 72 | 0.74 | 0.5 |
| Example 7 | 73 | 71 | 0.95 | 0.02 |
| Example 8 | 83 | 81 | 0.94 | 0.02 |
| Example 9 | 75 | 67 | 0.80 | 0.08 |
| Example 10 | 87 | 79 | 0.76 | 0.08 |
| Ref Ex. 1*1 | 67 | 60 | 0.83 | 0.1 |

(continued)

| Durability test results | Initial denitration rate [%] | Denitration rate after durability test [%] | Denitration capability retention rate [-] | Weight ratio of metallic oxide relative to 1 of zeolite |
|---|---|---|---|---|
| C. Ex. 1*2 | 93 | 75 | 0.52 | - |
| *1: "Ref. Ex." stands for "Reference Example".<br>*2: "C. Ex." stands for "Comparative Example". | | | | |

As is clear from the results indicated in Table 2, the exhaust gas purifying catalysts of Examples 1 to 10, each of which had a three-layered structure, had higher denitration capability retention rates than the exhaust gas purifying catalyst of Comparative Example 1, in which the metallic oxide and the zeolite were contained in a single layer (that is, which did not have a three-layered structure).

Industrial Applicability

The present invention is applicable to purification of an exhaust gas containing a nitrogen oxide ($NO_x$).

Reference Signs List

1    Metallic oxide
2    Zeolite
3    Substrate
10   Exhaust gas purifying catalyst

**Claims**

1.  An exhaust gas purifying catalyst for removing a nitrogen oxide in an exhaust gas to which at least one of a hydrocarbon and an alcohol is added, the exhaust gas purifying catalyst comprising:

    a substrate on which a metallic oxide and zeolite are supported, the metallic oxide being selected from Ti, Zr, Ce, Nb, Al, Si, and alkali metals,
    the exhaust gas purifying catalyst having a three-layered structure formed in the substrate,
    the three-layered structure being constituted by a layer having the metallic oxide supported thereon and having two sides respectively provided with layers having the zeolite supported thereon or by a layer having the zeolite supported thereon and having two sides respectively provided with layers having the metallic oxide supported thereon.

2.  The exhaust gas purifying catalyst as set forth in claim 1, wherein the metallic oxide is an oxide of Ti or Zr.

3.  The exhaust gas purifying catalyst as set forth in claim 1 or 2, wherein a weight ratio of the layer having the metallic oxide supported thereon is 0.02 to 0.5, relative to 1.0 of the layer having the zeolite supported thereon.

4.  A method for producing an exhaust gas purifying catalyst, comprising the steps of:

    forming, to a substrate, a metallic oxide layer having a metallic oxide supported thereon; and
    forming a zeolite layer that is a layer having zeolite supported thereon,
    the step of forming the zeolite layer being carried out after the step of forming the metallic oxide layer.

5.  A method for producing an exhaust gas purifying catalyst, comprising the steps of:

    forming, to a substrate, a metallic oxide layer having a metallic oxide supported thereon; and
    forming a zeolite layer that is a layer having zeolite supported thereon,

the step of forming the metallic oxide layer being carried out after the step of forming the zeolite layer.

FIG. 1

（a）

（b）

## INTERNATIONAL SEARCH REPORT

International application No.

PCT/JP2020/001119

A. CLASSIFICATION OF SUBJECT MATTER

Int. Cl. B01J29/69(2006.01)i, B01D53/86(2006.01)i, B01D53/90(2006.01)i, B01D53/94(2006.01)i, B01J37/02(2006.01)i, F01N3/10(2006.01)i, F01N3/28(2006.01)i, B01J35/06(2006.01)n
FI: B01J29/69 A ZAB, B01D53/86 222, B01D53/90, B01D53/94 222, B01D53/94400, B01J37/02 301D, F01N3/10 A, F01N3/28 Q, B01J35/06 A

According to International Patent Classification (IPC) or to both national classification and IPC

B. FIELDS SEARCHED

Minimum documentation searched (classification system followed by classification symbols)

Int. Cl. B01J21/00-38/74, B01D53/86-53/96, F01N3/10-3/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

DWPI (Derwent Innovation)

C. DOCUMENTS CONSIDERED TO BE RELEVANT

| Category* | Citation of document, with indication, where appropriate, of the relevant passages | Relevant to claim No. |
|---|---|---|
| X<br>A | JP 06-315635 A (PETROLEUM ENERGY CENTER) 15 November 1994, claims, examples 8, 10, paragraphs [0001], [0004]-[0022], [0033]-[0037], tables 1, 2 | 1-4<br>5 |
| X<br>Y<br>A | JP 04-197446 A (TOYOTA MOTOR CORP.) 17 July 1992, claims, examples, page 1, lower right column, paragraph [0003] to page 3, upper left column, paragraph [0005], page 5, upper right column, paragraph [0003] | 4<br>1-3<br>5 |
| X<br>Y | JP 2006-233774 A (TOYOTA MOTOR CORP.) 07 September 2006, claims, examples 1-2, paragraphs [0008], [0012]-[0025], table 1, fig. 1-3 | 4-5<br>1-3 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07.02.2020 | 03.03.2020 |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2020/001119

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2016-517348 A (BASF CORP.) 16 June 2016, | 4 |
| Y | claims, examples 5-6, paragraphs [0016], [0020], | 1-3 |
| A | [0067]-[0069], [0087], [0121]-[0124], fig. 3 | 5 |
| Y | JP 2004-195430 A (MATSUSHITA ELECTRIC INDUSTRIAL CO., LTD.) 15 July 2004, claims, paragraphs [0001], [0008], [0010]-[0013] | 1-3 |
| Y | JP 2010-149097 A (TANAKA KIKINZOKU KOGYO KABUSHIKI KAISHA) 08 July 2010, claim 3, paragraphs [0001], [0016] | 1-3 |
| Y | WO 2015/147257 A1 (HITACHI ZOSEN CORP.) 01 October 2015, paragraphs [0001], [0011], [0041]-[0061], examples | 1-3 |
| Y | JP 2017-177060 A (HITACHI ZOSEN CORP.) 05 October 2017, paragraphs [0012], [0024], [0051]-[0058] | 1-3 |
| A | JP 08-071428 A (ISHIKAWAJIMA-HARIMA HEAVY INDUSTRIES CO., LTD.) 19 March 1996, entire text, all drawings | 1-5 |

Form PCT/ISA/210 (continuation of second sheet) (January 2015)

**INTERNATIONAL SEARCH REPORT**
Information on patent family members

| International application No. |
| --- |
| PCT/JP2020/001119 |

| Patent Documents referred to in the Report | Publication Date | Patent Family | Publication Date |
| --- | --- | --- | --- |
| JP 06-315635 A | 15.11.1994 | (Family: none) | |
| JP 04-197446 A | 17.07.1992 | (Family: none) | |
| JP 2006-233774 A | 07.09.2006 | (Family: none) | |
| JP 2016-517348 A | 16.06.2016 | US 2014/0301923 A1 claims, examples 5-6, paragraphs [0017], [0028], [0077]-[0079], [0097], [0131]-[0136], fig. 3 WO 2014/160289 A1 EP 2969195 A1 CA 2900291 A CN 105026038 A KR 10-2015-0128698 A | |
| JP 2004-195430 A | 15.07.2004 | (Family: none) | |
| JP 2010-149097 A | 08.07.2010 | WO 2010/073956 A1 CN 101980779 A TW 201031464 A | |
| WO 2015/147257 A1 | 01.10.2015 | US 2017/0106356 A1 paragraphs [0001], [0015], [0044]-[0064], examples EP 3124115 A1 CN 106132540 A KR 10-2016-0140610 A | |
| JP 2017-177060 A | 05.10.2017 | US 2019/0083964 A1 paragraphs [0013], [0028], [0055]-[0062] EP 3437736 A1 KR 10-2018-0132623 A CN 109070067 A | |
| JP 08-071428 A | 19.03.1996 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015147257 A